# EUROPEAN PATENT SPECIFICATION

(11) **EP 2 769 818 B1**
(45) Date of publication and mention of the grant of the patent: **13.07.2016**
(21) Application number: 14168519.8
(22) Date of filing: 29.10.2013
(51) Int. Cl.: B29C 45/26, E03F 5/06

(54) **Drainage grid**
Ablaufgitter
Grille de drainage

(30) Priority: 29.10.2012 IT VR20120212
(43) Date of publication of application: 27.08.2014
(62) Divisional of application: 13190611.7
(73) Proprietor: Termoplast S.r.l., 37129 Verona (VR) (IT)
(72) Inventor: Cipriani, Zeno, 37121 Verona (VR) (IT)
(74) Representative: Fisauli, Beatrice A. M.

(56) References cited:
- DE-A1- 2 703 583
- DE-U1- 8 711 143
- US-B1- 6 443 656

## Description

The present invention refers, in general, to a drainage grid.

A wide variety of drainage grids are known to cover drainage channels, floor drains, inspection pits or similar hollow spaces that can be incorporated in the soil. Drainage grids of this type can be subjected to various load levels depending on where these grids are inserted.

The EN standards divide manholes and drainage grids in load classes on the base of their load resistance. The load classes are the following: A15, B125, C250, D400, E600, F900.

The classification provides the test load in kN. For instance, the class D400 denotes a product complying with a load test of 400kN. The appropriate class to use for manholes or pits depends on the place of installation, for instance their position inside the roadway.

For instance, the products of load class C250 to which the present invention refers, without this constituting a limitation to the scope of protection of the invention, are generally used for channels open at the top and installed close to the curb side of the sidewalks in an area which, if measured from the edge of the sidewalk, extends from a maximum of 0.5 m on the roadway to a maximum of 0.2 m on the sidewalk.

Said products falling under load class C250 are usually made of metal owing to the load these products must support.

The manufacturers are generally interested in producing drainage grids of the above mentioned type that must be the most stable and durable as possible, at the lowest possible cost.

A partial solution consists in using plastic materials but only for load classes lower than C250 owing to a lower resistance of the plastic material which involves drainage grids having a resistance much lower than that of the metal drainage grids.

As is known, plastic articles can be produced through an injection molding process in which a plastic material, usually a thermoplastic material, is molten and then injected under pressure into a mold formed by two matrices, one matrix being movable to allow the finished piece to be removed.

The prior art contemplates the existence of industrial injection molding processes that take advantage of matrices having such a shape that leads to the development and formation of the product almost entirely in the recesses formed on the movable matrix in order to achieve an easy extraction of the article from the movable matrix.

In the specific sector of the production of drainage grids, made of a plastic material, the drainage grids have a parallelepiped shape, usually having a rectangular section, with a plurality of through holes to mainly allow the passage of fluids through the grid, from the upper face to the lower face. A portion of the lower face comes into contact with the channel that supports the grid.

The known grids, made of a plastic material and showing said constructive structure, do not have a sufficient resistance and therefore, these grids can be used only in pedestrian areas because higher loads would lead to the breakage of the grid itself.

Some known drainage grids have a modified structure that improves the resistance. In particular, grids are known which have a section different from the rectangular section. For instance, the section of these grids has a swelling that develops from the lower face to the outside excluding the portions arranged to come into contact with the channel.

This structure having a lower bulge allows a modest increase in the load which the grid can support and allows the laying of the grid in areas of occasional non longitudinal passage of vehicles, in addition to pedestrian areas.

According to the known art, said grids are made through an injection molding process that utilizes the injection channel formed in the fixed matrix. The bulge in turn is formed in the fixed matrix for convenience of realization of the process and for design habits consolidated.

US 6,443,656 B1 discloses an assembly for forming a trench comprising a frame having two elongated members that define a support surface and at least one opening. The assembly also includes a removable grate that is disposed on the support surface and includes a hook that is disposed proximate the opening defined by the elongated frame members. The assembly also includes a removable pin that is slidably inserted through an opening defined by an elongated member and is mechanically engaged by the hook of the grate to secure the grate to the frame.

An aim of the invention is to carry out a drainage grid in a monolithic piece that can be mounted on a channel in the soil and utilized for the drainage of rainwater and waste so as to overcome the above-mentioned problems and others.

Another aim of the invention is to carry out a drainage grid in a plastic material and falling at least under the load class C250, normally reached by metallic grids, through its particular conformation and structure.

Another aim is to carry out an apparatus for the realization of a drainage grid improving its construction and resistance.

Another aim is to carry out an injection molding process that is simple and repeatable and, at the same time, allows to obtain a finished product having a resistant construction.

Said aims and others are achieved, according to an embodiment not part of the invention, through an apparatus for the injection molding of drainage grids having an arc-shaped cross-section at a face. The apparatus comprises a fixed matrix and a movable matrix. One or more cavities are formed between the fixed matrix and the movable matrix, said one or more cavities being adapted to receive a predetermined quantity of molten material.

The apparatus is characterized by the fact that the imprint of the one or more cavities is obtained almost entirely in the movable matrix while a predetermined quantity of molten material is contained, almost entirely, in cavities obtained in the fixed matrix, a sprue being obtained in the fixed matrix.

Through this construction, the apparatus allows to carry out outflow grids having ribs with a section shaped like an inverted T, which does not occur in the apparatuses of the prior art.

Advantageously, the fixed matrix may comprise a plurality of fixed male elements shaped like a truncated pyramid, the direction of reduction of their section being opposite to the direction of injection of the molten material in the sprue.

In this way, when the apparatus is opened, the outflow grid may be extracted and removed from the fixed matrix on remaining attached to the movable matrix. The height of the fixed male elements allows to obtain, almost completely, the cavity volume contained in the fixed matrix.

More advantageously, the movable matrix may comprise a plurality of buttons which protrude from the movable matrix for a height which is much lower than the height with which the fixed male elements protrude from the fixed matrix. The presence of buttons, obtained in the movable matrix allows to keep the outflow grid attached to the movable matrix after the solidification and allows, furthermore, to position the cavity portion that will contain the greatest section of the ribs in the movable matrix.

In addition, each end portion of the fixed male elements may be shaped so as to rest on the corresponding end surface of the related button so as to prevent the passage of plastic material between said portion and said surface when the apparatus is closed.

In this way, it is possible to obtain a better realization of the outflow grid ribs with a section shaped like an inverted T because most of the length of the section shaped like an inverted T, which has a reduced thickness, is carried out between the fixed male elements while the last portion of the section shaped like an inverted T, which has a greater thickness, is carried out between the buttons.

Advantageously, a first contact surface of the fixed matrix may be so shaped to abut with a second contact surface of the movable matrix. The portion of movable matrix forming the cavity receiving the outflow grid may be completely recessed in relation to the second contact surface and one or more portions of fixed matrix forming the cavity receiving the outflow grid may protrude from the first contact surface.

In this way, it is possible to obtain a better removal of the outflow grid from the fixed matrix when it is removed from the movable matrix.

Besides, the aims are achieved, according to another embodiment not part of the invention, by an injection molding process to mold drainage grids having an arc-shaped cross-section at a face.

The process is characterized by comprising the following phases:
- putting in contact a movable matrix with a fixed matrix, both being shaped so as to define one or more cavities; said one or more cavities being partially obtained in the movable matrix and partially obtained in the fixed matrix;
- injecting molten plastic material into the one or more cavities by means of a sprue;
- waiting for the solidification of the plastic material in the one or more cavities on obtaining a drainage grid for each of the one or more cavities;
- removing the movable matrix from the fixed matrix, the fixed matrix being extracted from the drainage grid, the drainage grid remaining attached to the movable matrix;
- extracting the drainage grid from the movable matrix by means of one or more extractors which are included in the movable matrix and go out on pushing the drainage grid.

Said aims and others are achieved according to the invention through a drainage grid according to claim 1.

Further features and details of the invention will be better understood from the following specification which is supplied as a non-limiting example as well as from the accompanying drawing, wherein:
Fig. 1 is an axonometric top view of a first embodiment of the drainage grid according to the invention;
Fig. 2 is a bottom view of the drainage grid in Fig. 1;
Fig. 3 is a plan top view of the drainage grid in Fig. 1;
Fig. 4 is a longitudinal side view of the drainage grid in Fig. 1;
Fig. 5 is a side view of the drainage grid in Fig. 1;
Fig. 6 is a side view in longitudinal section of the drainage grid according to section BB in Fig. 3;
Fig. 7 is a view in cross-section of the drainage grid according to section AA in Fig. 3;
Fig. 8 is a section view of a detail indicated by circle C in Fig. 6;
Fig. 9 is a section view of a detail indicated by circle D in Fig. 7;
Fig. 10 is an axonometric view of the drainage grid;
Fig. 11 is a view of a detail indicated by circle E in Fig. 10;
Fig. 12 is a front view of an apparatus for the realization of a drainage grid according to the invention;
Fig. 13 is a top view in longitudinal section of the apparatus according to section BB in Fig. 12;
Fig. 14x is a side view in cross-section of the apparatus according to section AA in Fig. 12;
Figures 15 to 18 are axonometric views representing the phases of an injection molding process to mold an outflow grid according to the invention;
Fig. 19 is a front view of the apparatus according to an embodiment not part of the invention;
Fig. 20 is a side view in section of the apparatus according to section CC in Fig. 20;
Fig. 21 is an axonometric view in section of the apparatus according to section CC in Fig. 20;
Fig. 22 is a view in section of a detail indicated by circle D in Fig. 21;
Fig. 23 is an axonometric view of an element of the apparatus, carried out according to the invention;
Fig. 24 is a view of a detail indicated by circle E in Fig. 23;
Fig. 25 is an axonometric view of a further element of the apparatus, carried out according to an embodiment not part of the invention;
Fig. 26 is a view of a detail indicated by circle F in Fig. 25.

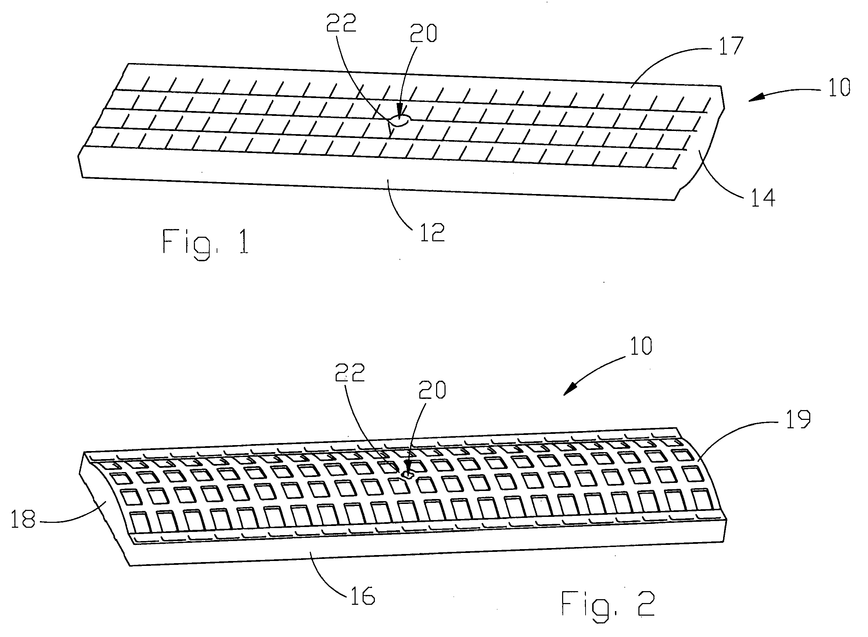

With reference to the accompanying figures, in particular Figure 1, number 10 denotes a drainage grid which is shaped like a rectangular element having four sides 12, 14, 16, 18, an upper face 17 and a lower face 19.

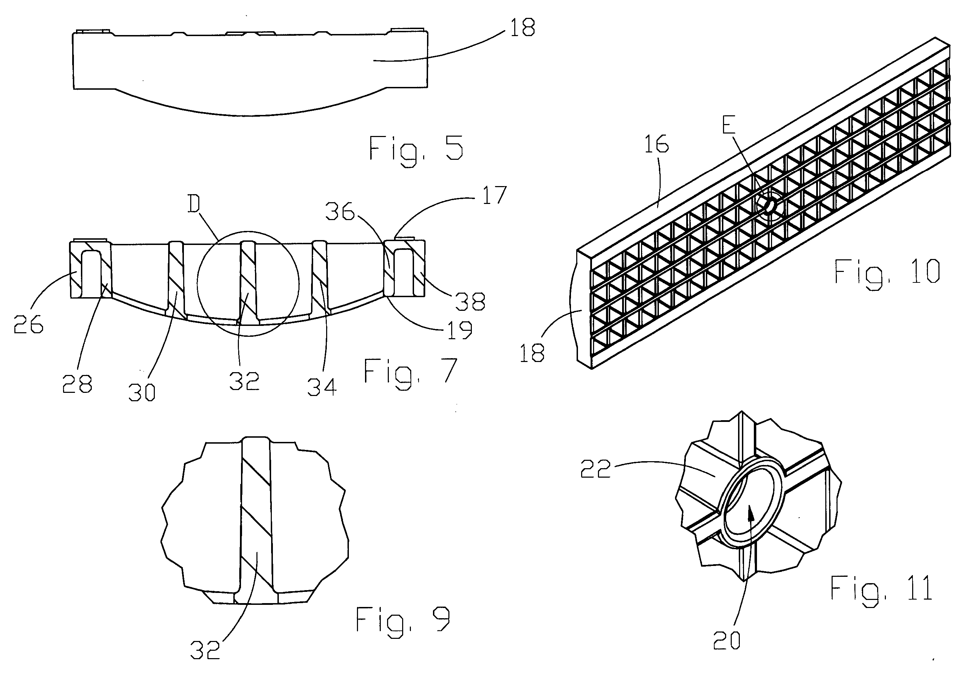

As visible in Figures 5 and 7, the drainage grid has an arc-shaped structure at the lower face 19, with ribs showing a T-shape. The T-ribs improve the resistance of the drainage grid according to the invention in comparison with the drainage grids of the prior art showing ribs of rectangular section.

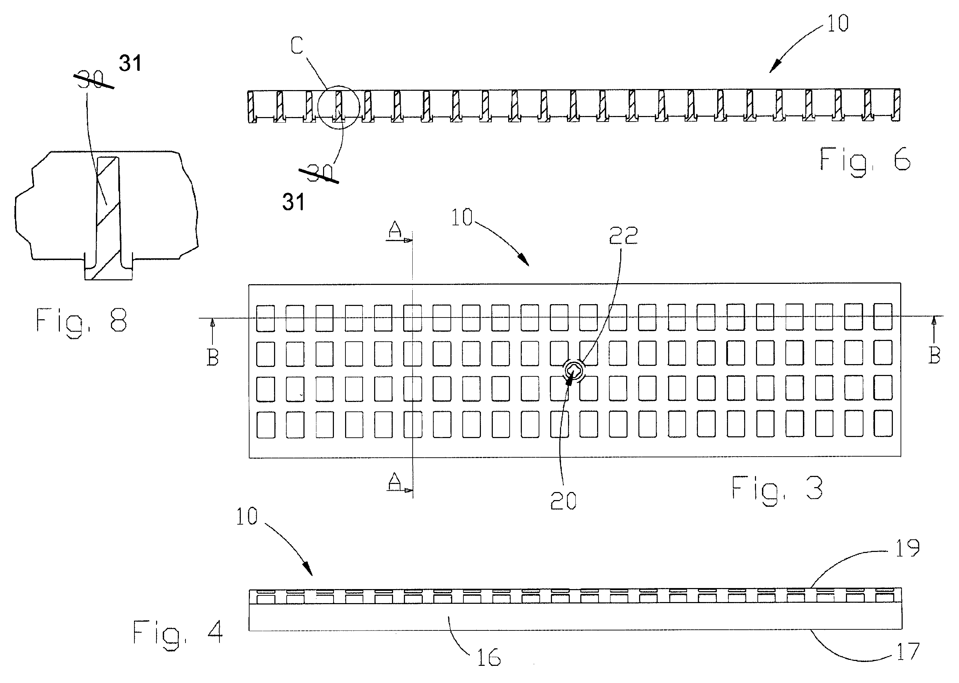

In particular, the drainage grid 10 has a particular base structure consisting of ribs shaped like an inverted T. More precisely, the base structure consists of twenty-three longitudinal ribs 31, as visible in Figure 6 and seven transverse ribs 26, 28, 30, 32, 34, 36, 38, as visible in Figure 7.

The two left transverse ribs 26, 28 are connected to each other at their base so as to form an element shaped like an inverted U. Symmetrically, the two right transverse ribs 36, 38 are connected to each other at their base so as to form another element shaped like an inverted U.

As visible in Figures 1, 2, 3, 10 and 11, the drainage grid 10 comprises a cylindrical body 22 in the middle of the rectangular element. A cavity 20 is formed in said cylindrical body 22.

The drainage grid 10 is made of plastic, preferably polyamide.

The so-described particular structure allows to concentrate the material of which the drainage grid 10 is made in its middle points such as the cylindrical body 22, represented in detail in Figure 11, in which the bending moment reaches its maximum peak during the application of a load.

The load acts on the drainage grid 10 proportionally to the distance from the edge of the channel or drain on which the drainage grid 10 rests once it has been put on. Thus, the maximum effort takes place, for that reason, along the longitudinal axis passing through the centre of the cavity 20, the cavity 20 being used, for instance, for the fixing of the drainage grid 10.

The butterfly diagram of the bending moment has its peak in the lowest point of the section in which the T-ribs improve the resistance of the section. The resulting effect is a considerable increase in tensile strength.

One of the main advantages is that, if the same class of resistance to load and the same kind of material are utilized, a much lighter drainage grid is obtained in comparison with the known grids on the market.

Although a specific embodiment of the invention has been represented and described in detail to explain the application of the principles of the invention, it is to be intended that, of course, the invention may be implemented in manifold variants, without departing from said principles, such as an inverted T-shape.

The known apparatuses and processes do not allow to carry out a drainage grid 10, as previously described, with the longitudinal and transverse ribs with inverted T shape according to the invention or with ribs having a greater section in the lower part of the drainage grid in question and corresponding to the most distant point to the point of application of the load, said area being subjected to a higher tensile stress.

An injection molding process for drainage grids is described below. This process allows to obtain a greater section in the points where the stress load is higher, namely in the lower part of the grid.

Also the apparatus for carrying out the drainage grid 10 according to the invention is described below with particular reference to the particular construction of the apparatus allowing to overcome the problems of the prior art.

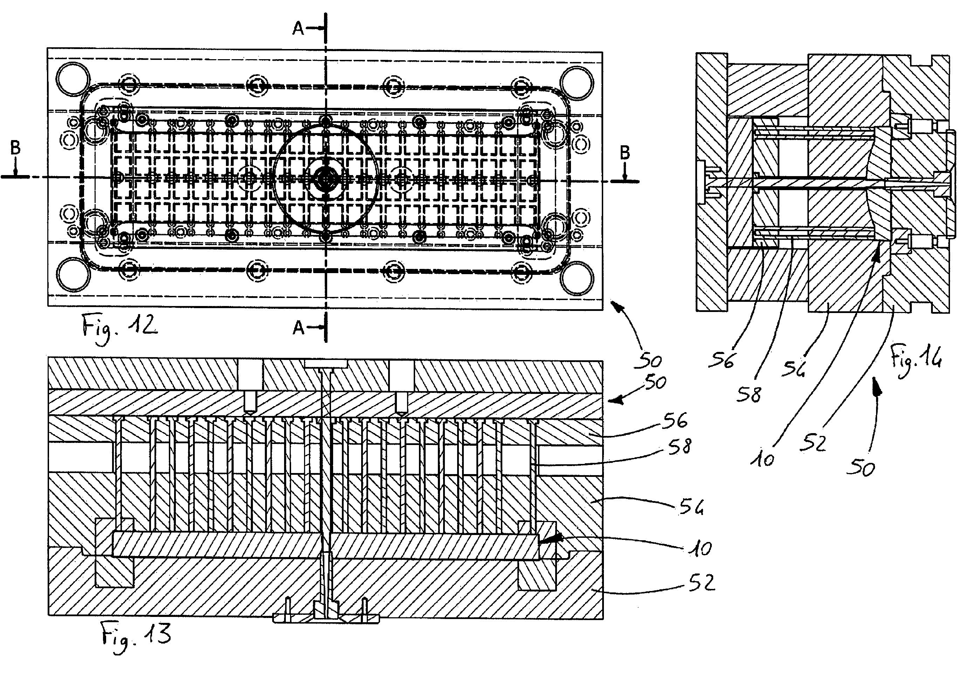

As visible in Figure 12 and subsequent figures, an apparatus 50 comprises a fixed matrix 52 and a movable matrix 54.

The movable matrix 54 comprises also an extraction table 56 to which more extractors 58 are connected, of which only one is represented in each figure. A cavity is formed between the fixed matrix 52 and the movable matrix 54 and receives the molten plastic material. When the molten plastic material solidifies, this material forms an outflow grid 10, as previously described.

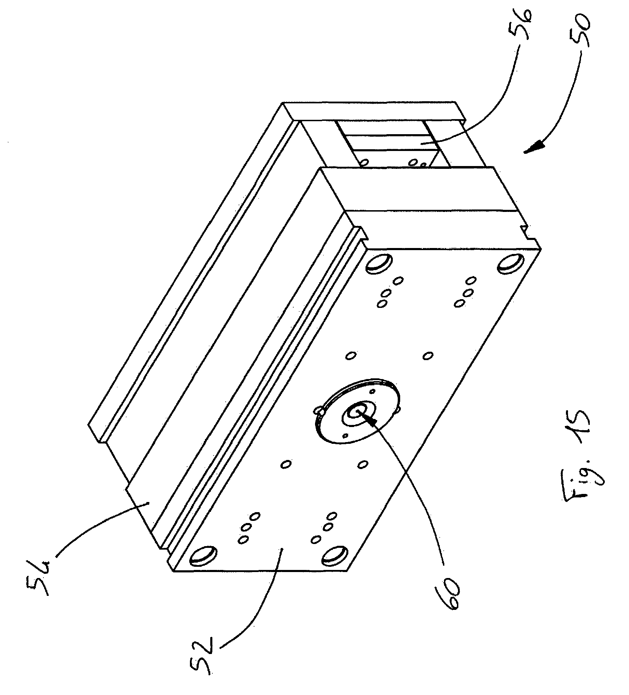

As represented in Figure 15, a sprue 60 is formed in the fixed matrix 52 and the molten plastic material is injected through said sprue in the cavity 20 of the outflow grid 10.

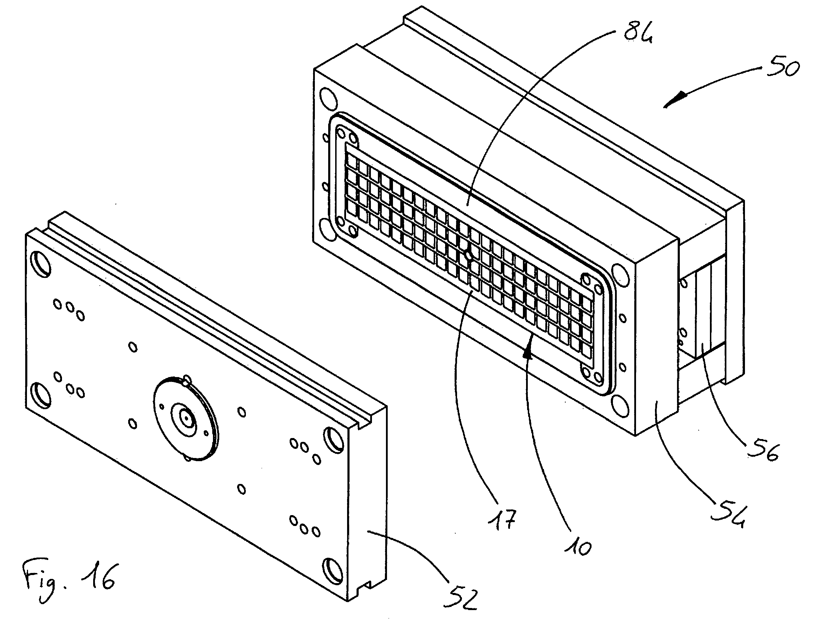

As from Figure 16, after the injection of plastic material through the sprue 60 and after the solidification of the plastic material, the apparatus 50 is opened so that the upper face 17 of the outflow grid 10 is exposed to the outside.

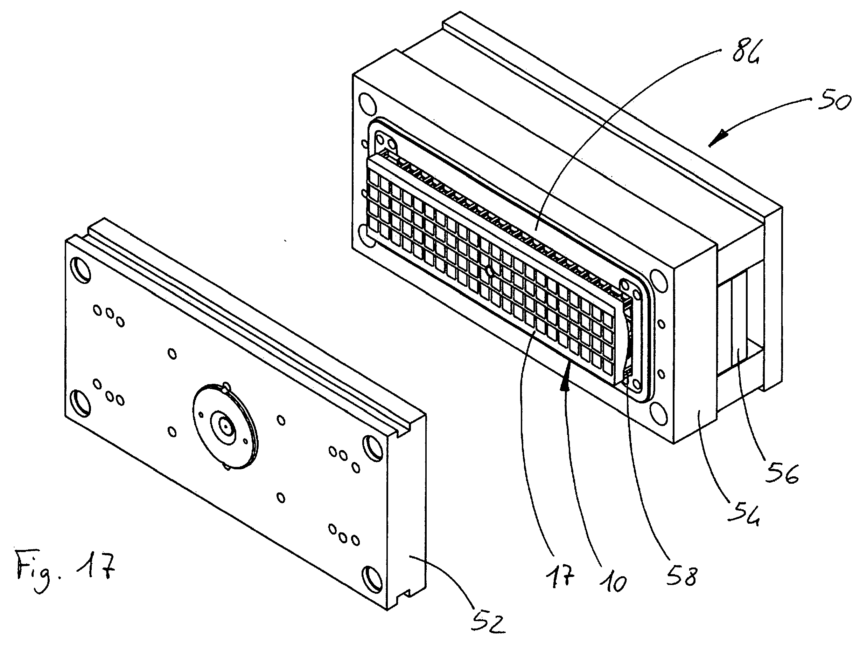

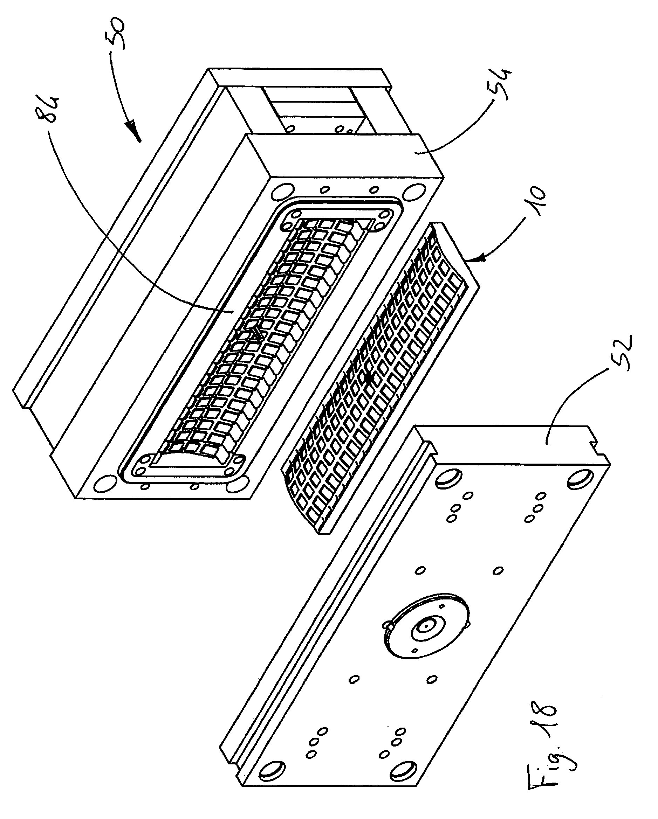

In the following phase, visible in Figure 17, the extraction table 56 advances on pushing the plurality of extractors 58 against the outflow grid 10. The thrust of the plurality of extractors 58 allows the outflow grid 10 to go out of the movable matrix 54 up to be free, as visible in Figure 18.

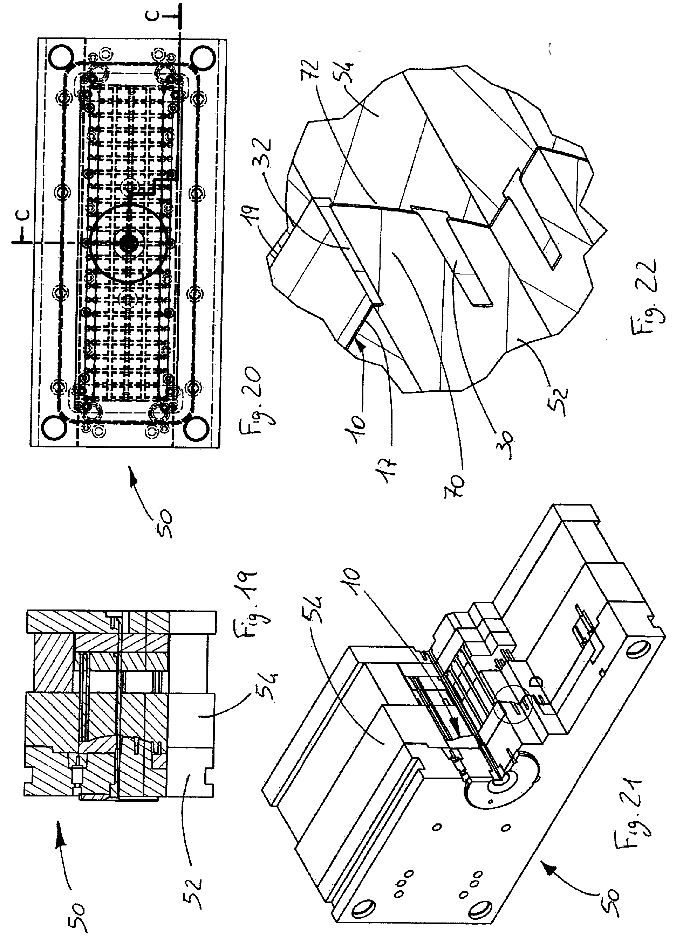

From Figures 19 to 22 it appears clearly the particular shape of the fixed matrix 52 and movable matrix 54 allowing to obtain a structure having a section shaped like an inverted T. In particular in Figure 22 it is possible to clearly see the section of the transverse ribs 30 and 32 whose section reduces on approaching the upper face 17.

Indeed, the section of the transverse ribs increases on approaching the lower face 19 up to reach the maximum section near the lower face 19, in the most remote points to the fixed matrix 52, contained in its cavity.

Thus, the particular shape of the matrices allows to obtain the particular section shaped like an inverted T and facilitates the opening of the apparatus 50 at the same time.

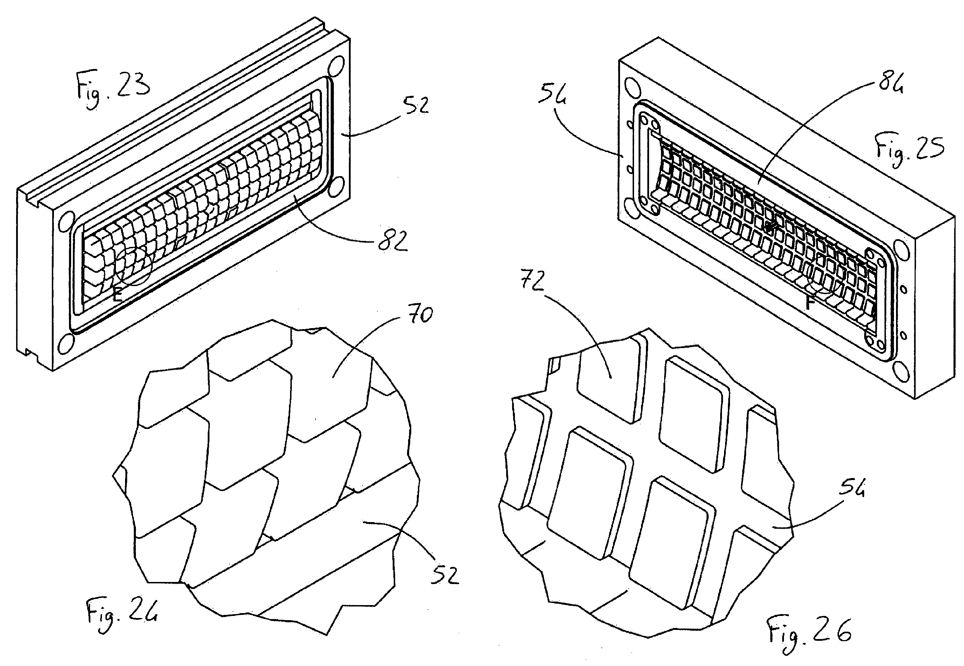

The particular construction of the matrices is visible also in Figures 23 to 26 from which it appears clearly the shape of the profile of the fixed matrix 52 and movable matrix 54 allowing to obtain an outflow grid 10 according to the invention.

In the detail of Figure 24, a plurality of fixed male elements 70 are visible, of which only one is indicated in the figure. The fixed male elements 70 are shaped substantially like a truncated pyramid and are obtained in the fixed matrix 52.

In the detail of Figure 26, a plurality of buttons 72 are visible, of which only one is indicated in the figure. The buttons 72 have a substantially rectangular shape and protrude from the movable matrix 54 with a height which is much lower than the height with which the fixed male elements 70 protrude from the fixed matrix 52.

Each end surface of the fixed male elements 70 is shaped to rest on the corresponding end surface of the relative button 72 in order to prevent the passage of plastic material between the two surfaces when the apparatus 50 is closed, as visible in Figure 15.

The height of the plurality of buttons 72 allows to hold the outflow grid 10 on the movable matrix 54 when the plastic material is solidified and the apparatus 50 is opened.

Besides, as visible in Figure 22, the buttons 72 are shaped in such a way as to allow the formation of the maximum section of the transverse ribs 30 and 32.

As it appears from Figure 23 and 25, a first contact surface 82 of the fixed matrix 52 abuts with a second contact surface 84 of the movable matrix 54. The cavity defined between the fixed matrix 52 and the movable matrix 54 is obtained almost entirely in the fixed matrix 52 while the imprint is obtained almost entirely in the movable matrix 54.

In other words, the portion of movable matrix 54 forming the cavity containing the outflow grid 10 is completely recessed in respect to the second contact surface 84 while a portion of fixed matrix 52 forming the cavity containing the outflow grid 10, namely the fixed male elements 70, protrudes from the first contact surface 82.

In this way, when the apparatus is opened by removing the movable matrix 54 from the fixed matrix 52, the outflow grid 10 is extracted from the fixed matrix 52. In this way, the outflow grid 10 remains substantially contained in the movable matrix 54, as visible in Figure 16.

Unlike the apparatuses known, the so-described construction of the apparatus 50 allows to obtain an outflow grid 10 according to the invention. The invention has been described according to an embodiment in which the article, namely an outflow grid, is produced by utilizing the injection molding of a plastic material.

It is to be intended that the scope of this disclosure includes also those processes and apparatuses which refer to the injection molding of outflow grids having dimensions, materials and other processing parameters varying according to the wished product, for instance apparatuses having multiple cavities for carrying out more than one outflow grid at the same time.

## Claims

1. Drainage grid (10) shaped as a rectangular element having four sides (12, 14, 16, 18), an upper face (17) and a lower face (19), having an arc-shaped structure at the lower face (19), comprising longitudinal ribs (31) and transverse ribs (26, 28, 30, 32, 34, 36, 38), with a section shaped like an inverted T, **characterized by** the fact that the ribs have a greater section in the lower part of the drainage grid.

2. Drainage grid (10) according to claim 1, wherein the grid has ribs shaped like an inverted T, forming a base structure consisting of twenty-three longitudinal ribs (31) and seven transverse ribs (26, 28, 30, 32, 34, 36, 38).

3. Drainage grid (10) according to one of the preceding claims, comprising a cylindrical body (22) positioned at the center of the rectangular element and in which a cavity (20) is formed.

4. Drainage grid (10) according to one of the preceding claims, wherein two right transverse ribs (36, 38) are connected to each other at their base so as to form another element shaped like an inverted U.

5. Drainage grid (10) according to one of the preceding claims, made of plastic.

## Patentansprüche

1. Entwässerungsgitter (10), als rechteckiges Element mit vier Seiten (12, 14, 16, 18), einer Oberseite (17) und einer Unterseite (19) geformt, das einen bogenförmigen Aufbau auf der Unterseite (19) aufweist, mit Längsrippen (31) und Querrippen (26, 28, 30, 32, 34, 36, 38), mit einem Querschnitt in der Form eines umgekehrten T, **dadurch gekennzeichnet, dass** die Rippen im unteren Teil des Entwässerungsgitters einen größeren Querschnitt aufweisen.

2. Entwässerungsgitter (10) nach Anspruch 1, wobei das Gitter Rippen in der Form eines umgekehrten T besitzt, die einen Grundaufbau bilden, der aus dreiundzwanzig Längsrippen (31) und sieben Querrippen (26, 28, 30, 32, 34, 36, 38) besteht.

3. Entwässerungsgitter (10) nach einem der vorhergehenden Ansprüche, das einen zylindrischen Körper (22) aufweist, der sich in der Mitte des rechteckigen Elements befindet und in dem ein Hohlraum (20) geformt ist.

4. Entwässerungsgitter (10) nach einem der vorhergehenden Ansprüche, wobei zwei rechten Querrippen (36, 38) an ihrer Basis derart miteinander verbunden sind, dass sie ein anderes Element in der Form eines umgekehrten U bilden.

5. Entwässerungsgitter (10) nach einem der vorhergehenden Ansprüche, aus Kunststoff gefertigt.

## Revendications

1. Grille de drainage (10) en forme d'un élément rectangulaire ayant quatre côtés (12, 14, 16, 18), une face supérieure (17) et une face inférieure (19), avec une structure en forme d'arc sur la face inférieure (19) comprenant des nervures longitudinales (31) et des nervures transversales (26, 28, 30, 32, 34, 36, 38), avec une section en forme de T inversé, **caractérisée par le fait que** les nervures ont une section plus grande dans la partie inférieure de la grille de drainage.

2. Grille de drainage (10) selon la revendication 1, dans laquelle la grille comprend des nervures en forme de T inversé, formant une structure de base constituée de vingt-trois nervures longitudinales (31) et sept nervures transversales (26, 28, 30, 32, 34, 36, 38).

3. Grille de drainage (10) selon l'une des revendications précédentes, comprenant un corps cylindrique (22) positionné au centre de l'élément rectangulaire, et dans lequel une cavité (20) est formée.

4. Grille de drainage (10) selon l'une des revendications précédentes, dans laquelle deux nervures transversales de droite (36, 38) sont reliées les unes aux autres à leur base de manière à former un autre élément en forme de U inversé.

5. Grille de drainage (10) selon l'une des revendications précédentes, en matière plastique.
